# EUROPÄISCHE PATENTANMELDUNG

(11) **EP 3 376 088 A1**
(43) Veröffentlichungstag der Anmeldung: **19.09.2018**
(21) Anmeldenummer: 18153829.9
(22) Anmeldetag: 29.01.2018
(51) Int. Cl.: F16L 57/00, F16L 57/02, F16L 57/04, F16L 57/06, H02G 3/04, B29C 47/00, B60R 16/02, F16L 59/02

(54) **HÜLLSCHLAUCH ZUM UMHÜLLEN EINER LEITUNG**

(30) Priorität: 14.03.2017 DE 102017105400
(71) Anmelder: Poppe GmbH, 35392 Gießen (DE)
(72) Erfinder: BECKERT, Johannes, 35638 Leun (DE); ALLMANN, Günter, 35444 Biebertal (DE)
(74) Vertreter: Patentship Patentanwaltsgesellschaft mbH

(57) **Zusammenfassung**

Die vorliegende Erfindung betrifft einen Hüllschlauch (100) zum Umhüllen einer Leitung (300), insbesondere einer fluidführenden Leitung (300), wobei der Hüllschlauch (100) eine elastomere Schlauchwandung (101) aufweist, in welcher ein Schlitz (105) gebildet ist, und wobei der Schlitz (105) die elastomere Schlauchwandung (101) Helix-förmig durchtrennt.

## Beschreibung

Die vorliegende Erfindung betrifft einen Hüllschlauch zum Umhüllen einer Leitung, insbesondere einen Hüllschlauch zum Umhüllen einer fluidführenden Leitung in einem Kraftfahrzeug.

In einem Kraftfahrzeug wird eine Vielzahl von Leitungen, insbesondere Fluidleitungen verwendet, um Gase, wie z.B. Luft oder Flüssigkeiten, zu transportieren. Beim Betrieb eines Verbrennungsmotors in einem Kraftfahrzeug werden Fluide oftmals mit hohen Temperaturen und hohem Druck durch die entsprechenden Leitungen geleitet. Somit müssen die Leitungen hohen thermischen und mechanischen Belastungen standhalten. Aufgrund der oftmals beengten Bauraumsituation in einem Kraftfahrzeug müssen entsprechende Leitungen oftmals gebogen werden, um die Leitungen platzsparend in einem Kraftfahrzeug zu verlegen. Aufgrund der oftmals geringen Biegeradien der Leitungen werden Elemente benötigt, welche die Leitungen im Bereich der Biegungen wirksam schützen können, damit die verwendeten Leitungen einem hohen Druck und hohen Temperaturen widerstehen können, hohen dynamischen Belastungen standhalten können, eine hohe Lebensdauer aufweisen und damit die verwendeten Leitungen nicht in einen direkten Kontakt mit anderen Bauteilen kommen.

Es ist die der Erfindung zugrundeliegende Aufgabe, einen Hüllschlauch zum Umhüllen einer Leitung in einem Kraftfahrzeug bereitzustellen, wobei der Hüllschlauch eine wirksame Schutzfunktion für die Leitung ermöglicht.

Diese Aufgabe wird durch Gegenstände mit den Merkmalen nach den unabhängigen Ansprüchen gelöst. Vorteilhafte Ausführungsformen der Erfindung sind Gegenstand der Figuren, der Beschreibung und der abhängigen Ansprüche.

Gemäß einem ersten Aspekt der Erfindung wird die Aufgabe durch einen Hüllschlauch zum Umhüllen einer Leitung, insbesondere einer fluidführenden Leitung gelöst, wobei der Hüllschlauch eine elastomere Schlauchwandung aufweist, in welcher ein Schlitz gebildet ist, und wobei der Schlitz die elastomere Schlauchwandung Helix-förmig durchtrennt.

Dadurch wird beispielsweise der technische Vorteil erreicht, dass der Hüllschlauch durch den die elastomere Schlauchwandung Helix-förmig durchtrennenden Schlitz besonders flexible Eigenschaften aufweist, welche es ermöglichen, dass der Hüllschlauch mit besonders geringen Biegeradien in einem Kraftfahrzeug verlegt werden kann. Der Hüllschlauch kann hierbei eine Leitung wirksam umhüllen und damit eine ausreichende Schutzfunktion für die Leitung bereitstellen.

Die durch den Hüllschlauch umhüllten Leitungen können fluidführende Leitungen zum Leiten von Fluid umfassen. Die durch den Hüllschlauch umhüllten Leitungen können jedoch alternativ auch elektrische Leitungen umfassen, in welchen elektrische Stromkabel geführt sind.

Der die elastomere Schlauchwandung Helix-förmig durchtrennende Schlitz stellt hierbei besonders vorteilhafte Biegungseigenschaften des Hüllschlauchs sicher. Wird der Hüllschlauch um einen Biegepunkt gebogen, weitet sich der die elastomere Schlauchwandung durchtrennende Schlitz an einer dem Biegepunkt abgewandten Seite der elastomeren Schlauchwandung auf. Durch die Aufweitung des Schlitzes wird der Bewegungsspielraum des Hüllschlauchs erhöht, so dass dieser mit geringen Biegeradien verlegt werden kann. Gleichzeitig umhüllt die elastomere Schlauchwandung des Hüllschlauchs die in dem Hüllschlauch aufgenommene Leitung vorteilhaft, um eine wirksame Schutzfunktion der Leitung im Bereich der Biegung sicherzustellen. Durch den Helix-förmigen Schlitz kann die Leitung zum einen wirksam in den Hüllschlauch eingeführt werden, und zum anderen ermöglicht der Helix-förmige Schlitz, dass der Hüllschlauch zusammen mit der Leitung wirksam gebogen werden kann. Der Hüllschlauch kann jedoch auch vorteilhaft in geraden Abschnitten der Leitung eingesetzt werden.

Die Verwendung einer elastomeren Schlauchwandung bietet den Vorteil, dass eine aus einem Elastomer bestehende Schlauchwandung eine besonders hohe Beständigkeit gegenüber hohen Temperaturen und auch eine besonders hohe chemische Beständigkeit gegenüber Umwelteinflüssen, wie z.B. Ozon, ermöglicht.

In einer vorteilhaften Ausführungsform erstreckt sich der Schlitz von einem ersten Längsende des Hüllschlauchs zu einem gegenüberliegenden zweiten Längsende des Hüllschlauchs und umläuft der Schlitz die elastomere Schlauchwandung mehrmals, um die elastomere Schlauchwandung Helix-förmig zu durchtrennen.

Dadurch wird beispielsweise der technische Vorteil erreicht, dass der die elastomere Schlauchwandung mehrmals umlaufende Schlitz, welcher sich von dem ersten Längsende zu dem gegenüberliegenden zweiten Längsende des Hüllschlauchs entlang der Längsrichtung des Hüllschlauchs Helix-förmig erstreckt, besonders vorteilhafte Biegeeigenschaften des Hüllschlauchs bereitstellt.

In einer weiteren vorteilhaften Ausführungsform ist der Hüllschlauch als ein elastisch verformbarer und biegbarer Hüllschlauch ausgebildet, und ist insbesondere der Schlitz zumindest abschnittsweise aufweitbar, um ein Biegen des Hüllschlauchs zu ermöglichen.

Dadurch wird beispielsweise der technische Vorteil erreicht, dass der Hüllschlauch besonders vorteilhaft verbogen, insbesondere in einer ersten und/oder zweiten Querrichtung des Hüllschlauchs, verbogen werden kann, wobei sich die erste und zweite Querrichtung jeweils quer zur Längsrichtung des Hüllschlauchs erstrecken und wobei sich die erste und zweite Querrichtung jeweils quer zueinander erstrecken. Wenn der Hüllschlauch um einen Biegepunkt gebogen wird, wird die elastomere Schlauchwandung des Hüllschlauchs an einer dem Biegepunkt abgewandten Seite gedehnt. Hierdurch weitet sich der Schlitz an der dem Biegepunkt abgewandten Seite der elastomeren Schlauchwandung auf. Dadurch kann der Hüllschlauch einfach und mit einem sehr geringen Kraftaufwand in die gewünschte Form gebogen werden, ohne den Hüllschlauch zu beschädigen.

In einer weiteren vorteilhaften Ausführungsform weist der die elastomere Schlauchwandung Helix-förmig durchtrennende Schlitz eine konstante Ganghöhe auf.

Dadurch wird beispielsweise der technische Vorteil erreicht, dass durch die konstante Ganghöhe des Schlitzes, der Helix-förmige Schlitz die elastomere Schlauchwandung gleichmäßig umlaufend durchtrennt. Die Ganghöhe ist hierbei diejenige Strecke in Längsrichtung des Hüllschlauchs, um die sich der Helix-förmige Schlitz bei einer vollen Umdrehung in Längsrichtung des Hüllschlauches windet. Eine konstante Ganghöhe bedeutet, dass der Schlitz die elastomere Schlauchwandung in gleichlangen Abschnitten des Hüllschlauches mit derselben Anzahl von Umrundungen umlaufend durchtrennt. Dadurch sind die Biegeeigenschaften des Hüllschlauchs über die gesamte Länge des Hüllschlauchs konstant. Die Ganghöhe kann zwischen 5 mm und 100 mm, insbesondere 25 mm, betragen.

In einer weiteren vorteilhaften Ausführungsform weist die elastomere Schlauchwandung einen ersten Wandungsbereich auf, wobei der Helix-förmige Schlitz in dem ersten Wandungsbereich eine erste Ganghöhe aufweist, wobei die elastomere Schlauchwandung einen zweiten Wandungsbereich aufweist, welcher sich an den ersten Wandungsbereich anschließt, wobei der Helix-förmige Schlitz in dem zweiten Wandungsbereich eine zweite Ganghöhe aufweist, und wobei die erste und zweite Ganghöhe unterschiedlich sind.

Dadurch wird beispielsweise der technische Vorteil erreicht, dass durch die unterschiedlichen Ganghöhen des die elastomere Schlauchwandung Helix-förmig durchtrennenden Schlitzes in dem ersten und zweiten Wandungsbereich die Biegungseigenschaften des Hüllschlauchs in dem ersten und zweiten Wandungsbereich unterschiedlich sind. Somit können über die gesamte Länge der elastomeren Schlauchwandung unterschiedliche Ganghöhen des Schlitzes ermöglicht werden, wodurch die Biegeeigenschaften des Hüllschlauchs bereichsweise angepasst werden können. Bei einer geringen Ganghöhe umrundet der Helix-förmige Schlitz die elastomere Schlauchwandung bei eine festgelegten Länge des Hüllschlauches öfter, als bei einer großen Ganghöhe. Dadurch ist der Bereich eines Hüllschlauchs mit einer geringen Ganghöhe leichter biegbar, als der Bereich eines Hüllschlauchs mit einer großen Ganghöhe. Die erste und zweite Ganghöhe des Helix-förmigen Schlitzes beträgt insbesondere jeweils zwischen 5 mm und 100 mm, z.B. kann eine der ersten und zweiten Ganghöhen 25 mm betragen.

In einer weiteren vorteilhaften Ausführungsform begrenzt der die elastomere Schlauchwandung Helix-förmig durchtrennende Schlitz einen Wandungsabschnitt der elastomeren Schlauchwandung, und erstreckt sich der Wandungsabschnitt entlang einer Längsrichtung des Hüllschlauchs Helix-förmig.

Dadurch wird beispielsweise der technische Vorteil erreicht, dass der durch den Schlitz begrenzte und sich entlang der Längsrichtung des Hüllschlauches Helix-förmig erstreckende Wandungsabschnitt ein besonders wirksames Biegen des Hüllschlauchs sicherstellt. Der die elastomere Schlauchwandung Helix-förmig durchtrennende Schlitz zertrennt die elastomere Schlauchwandung hierbei in den Helix-förmigen Wandungsabschnitt. Der Wandungsabschnitt erstreckt sich als ein Helix-förmig gewickeltes Band entlang der Längsrichtung des Hüllschlauchs, wobei der Helix-förmige Wandungsabschnitt eine Längsachse des Hüllschlauchs mehrmals umläuft, und wobei die Ränder des Wandungsabschnitts durch den Helix-förmigen Schlitz begrenzt sind. Der Wandungsabschnitt kann besonders vorteilhaft aufgebogen werden, um die Leitung im Inneren des Hüllschlauchs aufzunehmen, wobei sich der Wandungsabschnitt hierbei anschließend aufgrund der elastischen Eigenschaften erneut in die Ursprungsform verformt, wodurch der Hüllschlauch die Leitung wirksam umhüllen kann.

In einer weiteren vorteilhaften Ausführungsform weist der Wandungsabschnitt eine Wandungsbreite auf, welche sich entlang der Längsrichtung des Hüllschlauchs erstreckt, wobei die Wandungsbreite insbesondere über die gesamte Länge der elastomeren Schlauchwandung konstant ist.

Dadurch wird beispielsweise der technische Vorteil erreicht, dass eine über die gesamte Länge der elastomeren Schlauchwandung konstante und damit gleichbleibende Wandungsbreite sicherstellt, dass die Biegeeigenschaften des Hüllschlauchs über die gesamte Länge der elastomeren Schlauchwandung konstant sind. Die Wandungsbreite entspricht hierbei der Breite des Wandungsabschnitts, wenn sich der Wandungsabschnitt in einem nicht Helix-förmigen und damit entrollten Zustand befindet. Die Wandungsbreite beträgt insbesondere zwischen 5 mm und 100 mm, z.B. 25 mm.

In einer weiteren vorteilhaften Ausführungsform umfasst die elastomere Schlauchwandung zumindest ein Elastomer, welches ausgewählt ist aus der Gruppe umfassend Ethylen-Propylen-Dien-Kautschuk (EPDM), Ethylen-Acrylat-Kunststoff (AEM), Chloropren (CR), Acrylnitril-Butadien-Kautschuk (NBR), Silikon-Kautschuk, oder Mischungen davon.

Dadurch wird beispielsweise der technische Vorteil erreicht, dass die gewählten Elastomere besonders vorteilhafte Biegeeigenschaften, sowie eine vorteilhafte chemische Beständigkeit und Temperaturbeständigkeit der elastomeren Schlauchwandung sicherstellen.

In einer weiteren vorteilhaften Ausführungsform umfasst die die elastomere Schlauchwandung zumindest ein Elastomer, welches ein thermoplastisches Elastomer (TPE), ein thermoplastisches Elastomer-Vulkanisat (TPE-V) oder Mischungen davon umfasst.

Dadurch wird beispielsweise der technische Vorteil erreicht, dass die gewählten Elastomere besonders vorteilhafte Biegeeigenschaften, sowie eine vorteilhafte chemische Beständigkeit und Temperaturbeständigkeit der elastomeren Schlauchwandung sicherstellen.

In einer weiteren vorteilhaften Ausführungsform umfasst die elastomere Schlauchwandung zumindest ein geschäumtes Elastomer mit Poren.

Dadurch wird beispielsweise der technische Vorteil erreicht, dass ein geschäumtes Elastomer mit Poren besonders wirksame elastische Eigenschaften der elastomeren Schlauchwandung bereitstellt.

In einer weiteren vorteilhaften Ausführungsform begrenzt die elastomere Schlauchwandung einen Schlauchhohlraum, welcher ausgebildet ist, eine Leitung, insbesondere eine fluidführende Leitung, aufzunehmen.

Dadurch wird beispielsweise der technische Vorteil erreicht, dass die Leitung besonders wirksam in dem durch die elastomere Schlauchwandung begrenzten Schlauchhohlraum aufgenommen werden kann, wodurch der Hüllschlauch die Leitung besonders wirksam umhüllen kann.

In einer weiteren vorteilhaften Ausführungsform ist die elastomere Schlauchwandung aus einer Vielzahl von aneinander anliegenden Elastomerschichten gebildet, wobei die Elastomerschichten insbesondere aus unterschiedlichen Elastomeren gebildet sind.

Dadurch wird beispielsweise der technische Vorteil erreicht, dass verschiedene Elastomerschichten in dem Hüllschlauch ermöglichen, dass die Eigenschaften des Hüllschlauchs durch die Anzahl der Elastomerschichten, bzw. durch die Wahl der entsprechenden Elastomere in den Elastomerschichten, vorteilhaft an die auftretenden Temperaturen, bzw. an das durch die Leitung geleitete Fluid angepasst werden können.

In einer weiteren vorteilhaften Ausführungsform weist elastomere Schlauchwandung eine Verstärkungsschicht auf, welche ausgebildet ist, die elastomere Schlauchwandung zu verstärken.

Dadurch wird beispielsweise der technische Vorteil erreicht, dass durch die Verstärkungsschicht, insbesondere Aramid-Fasern, besonders vorteilhafte mechanische Eigenschaften der elastomeren Schlauchwandung bereitgestellt werden können.

Gemäß einem zweiten Aspekt der Erfindung wird die Aufgabe durch eine Leitungsanordnung gelöst, umfassend einen Hüllschlauch nach dem ersten Aspekt, und eine Leitung, insbesondere eine fluidführende Leitung zum Leiten eines Fluids, wobei der Hüllschlauch die Leitung zumindest abschnittsweise umhüllt.

Dadurch wird beispielsweise der technische Vorteil erreicht, dass die Leitungsanordnung ein wirksames Anordnen einer Leitung zusammen mit dem Hüllschlauch in einem Kraftfahrzeug sicherstellt. Hierbei umhüllt der Hüllschlauch die Leitung, insbesondere die fluidführende Leitung, zumindest abschnittsweise und schützt die Leitung vorteilhaft vor Beschädigungen, insbesondere in den Bereichen der Leitung in welchen besonders hohe mechanische Belastungen zu erwarten sind, wie z.B. im Bereich einer Biegung der Leitung. Durch die vorteilhaften Biegeeigenschaften des Hüllschlauches kann die Leitung vorteilhaft zusammen mit dem Hüllschlauch mit engen Biegeradien gebogen werden und in einem Kraftfahrzeug verbaut werden. Die Leitung kann insbesondere eine Kraftstoffleitung, welche ausgebildet ist, Kraftstoff zu leiten, eine Bremsleitung, welche ausgebildet ist, eine Bremsflüssigkeit zu leiten oder eine Klimaanlagenleitung, welche ausgebildet ist, eine Kühlflüssigkeit zu leiten, umfassen.

In einer weiteren vorteilhaften Ausführungsform ist die Leitung als eine biegbare Leitung ausgebildet, ist der Hüllschlauch als ein elastisch verformbarer und biegbarer Hüllschlauch ausgebildet ist, und ist insbesondere der Schlitz zumindest abschnittsweise aufweitbar, um einen Einführen der Leitung in den Hüllschlauch und ein Biegen des Hüllschlauchs zusammen mit der Leitung zu ermöglichen.

Dadurch wird beispielsweise der technische Vorteil erreicht, dass die Leitungsanordnung besonders vorteilhaft und mit geringen Biegeradien verbaut werden kann. Hierbei wird der Schlitz aufgeweitet, wodurch die Leitung in den Hüllschlauch eingeführt werden kann und damit der Hüllschlauch die Leitung zumindest abschnittsweise vorteilhaft umhüllen kann. Anschließend kann die Leitung zusammen mit dem Hüllschlauch wirksam in die gewünschte Form gebogen werden.

Gemäß einem dritten Aspekt der Erfindung wird die Aufgabe durch ein Verfahren zum Herstellen eines Hüllschlauchs zum Umhüllen einer Leitung, insbesondere einer fluidführenden Leitung, gelöst, umfassend die folgenden Schritte, Extrudieren eines Hüllschlauchs mit einer elastomeren Schlauchwandung, Anlegen einer Schneidevorrichtung an die elastomere Schlauchwandung; Bewegen des Hüllschlauchs, wobei die Schneidevorrichtung während der Bewegung des Hüllschlauchs die elastomere Schlauchwandung schneidet, um einen Schlitz in der elastomere Schlauchwandung zu erzeugen, welcher die elastomere Schlauchwandung Helix-förmig durchtrennt.

Dadurch wird beispielsweise der technische Vorteil erreicht, dass eine besonders vorteilhafte Fertigung eines Hüllschlauchs mit einem Schlitz bereitgestellt werden kann, welcher die elastomere Schlauchwandung Helix-förmig durchtrennt. Nach einer Extrusion des Hüllschlauchs mit der elastomeren Schlauchwandung kann der Hüllschlauch wirksam bewegt werden. Hierbei wird die Schneidevorrichtung an die elastomere Schlauchwandung angelegt und die Schneidevorrichtung schneidet während der Bewegung des Hüllschlauchs einen Schlitz in die elastomere Schlauchwandung, welcher die elastomere Schlauchwandung Helix-förmig durchtrennt.

Ausführungsbeispiele der Erfindung sind in den Zeichnungen dargestellt und werden im Folgenden näher beschrieben.

Es zeigen:
- Fig. 1: eine perspektivische Ansicht eines Hüllschlauchs zum Umhüllen einer Leitung;
- Fig. 2: eine perspektivische Ansicht eines gebogenen Hüllschlauchs zum Umhüllen einer Leitung;
- Fig. 3: eine perspektivische Ansicht einer Leitungsanordnung mit einer von einem Hüllschlauch umhüllten Leitung; und
- Fig. 4: ein Verfahren zum Herstellen eines Hüllschlauchs zum Umhüllen einer Leitung.

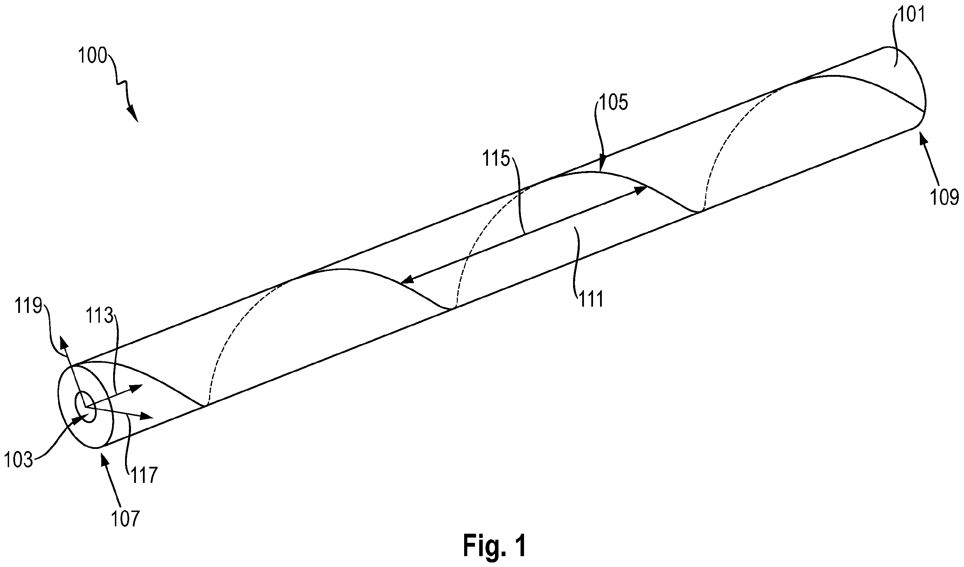

Fig. 1 zeigt eine perspektivische Ansicht eines Hüllschlauchs zum Umhüllen einer in Fig. 1 nicht dargestellten Leitung. Die Hüllschlauch 100 ist ausgebildet eine Leitung, insbesondere eine fluidführende Leitung zum Leiten von Fluid vor Beschädigungen zu schützen. Hierbei ist die Leitung insbesondere in einem Kraftfahrzeug angeordnet und die Leitung kann insbesondere eine Kraftstoffleitung, welche ausgebildet ist Kraftstoff zu leiten, eine Bremsleitung, welche ausgebildet ist, Bremsflüssigkeit zu leiten, oder eine Klimaanlagenleitung, welche ausgebildet ist, Kühlflüssigkeit zu leiten, umfassen. Die Leitung kann jedoch alternativ auch eine elektrische Leitung umfassen, in welcher elektrische Kabel geführt sind.

Aufgrund des Betriebs eines Motors in einem Kraftfahrzeug ist die Leitung thermischen Belastungen ausgesetzt, und muss eine chemische Beständigkeit gegenüber den durch eine Fluidleitung geleiteten Fluiden, bzw. gegenüber äußeren Umwelteinflüssen, aufweisen. Zudem muss die Leitung hohen dynamischen Belastungen standhalten, eine hohe Lebensdauer aufweisen, sowie kostengünstig und reproduzierbar herzustellen sein, sowie nicht mit anderen Bauteilen in Kontakt kommen.

Um hierbei einen wirksamen Schutz der Leitung bereitzustellen, wird ein Hüllschlauch 100 als Schutzschicht für die Leitung verwendet. Aufgrund der oftmals beengten Bauraumsituation in einem Kraftfahrzeug muss der Hüllschlauch 100 flexible Eigenschaften aufweisen, um somit ein Verlegen des Hüllschlauchs 100 zusammen mit der Leitung in engen Radien oder Kurven, oder auf geraden Abschnitten der Leitung zu ermöglichen.

Fig. 1 zeigt einen Hüllschlauch 100 mit einer elastomeren Schlauchwandung 101. Die elastomere Schlauchwandung 101 ist hierbei aus zumindest einem Elastomer gebildet und elastisch verformbar. Das Elastomer kann ausgewählt werden aus der Gruppe umfassend Ethylen-Propylen-Dien-Kautschuk (EPDM), Ethylen-Acrylat-Kunststoff (AEM), Chloropren (CR), Acrylnitril-Butadien-Kautschuk (NBR), Silikon-Kautschuk, oder Mischungen davon. Das Elastomer kann ein thermoplastisches Elastomer (TPE), ein thermoplastisches Elastomer-Vulkanisat (TPE-V) oder Mischungen davon umfassen, oder kann ein geschäumtes Elastomer mit Poren umfassen.

Die elastomere Schlauchwandung 101 kann auch mehrere aneinander anliegende Elastomerschichten und/oder eine Verstärkungsschicht, z.B. aus Aramid, umfassen.

Durch die Wahl des Elastomers kann eine besonders wirksame chemische Beständigkeit der elastomeren Schlauchwandung 101 des Hüllschlauchs 100 gegenüber äußeren Umwelteinflüssen, wie z.B. Ozon, sichergestellt werden.

Die elastomere Schlauchwandung 101 begrenzt einen Schlauchhohlraum 103 des Hüllschlauchs 100, welcher ausgebildet ist die in Fig. 1 nicht dargestellte Leitung aufzunehmen.

In der elastomeren Schlauchwandung 101 ist ein Schlitz 105 gebildet, welcher die elastomere Schlauchwandung 101 Helix-förmig durchtrennt. Hierbei erstreckt sich der Schlitz 105 von einem ersten Längsende 107 des Hüllschlauchs 100 zu einem gegenüberliegenden zweiten Längsende 109 des Hüllschlauchs 100, wobei der Schlitz 105 die elastomere Schlauchwandung 101 mehrmals umläuft, um die elastomere Schlauchwandung 101 Helix-förmig zu durchtrennen. Hierbei weist der die elastomere Schlauchwandung 101 Helix-förmig durchtrennende Schlitz 105 eine konstante Ganghöhe auf, was bedeutet, dass in gleichlangen Abschnitten des Hüllschlauchs 100 der Schlitz 105 die elastomere Schlauchwandung 101 gleich oft umrundet. Auch wenn dies in Fig. 1 nicht dargestellt ist, kann der Schlitz 105 in einer alternativen Ausführungsform in unterschiedlichen Bereichen unterschiedliche Ganghöhen aufweisen.

Der Schlitz 105 begrenzt einen Wandungsabschnitt 111 der elastomeren Schlauchwandung 101. Durch den Schlitz 105 wird die elastomere Schlauchwandung 101 in ein gewundenes Schlauchband aufgetrennt, welches den Wandungsabschnitt 111 der elastomeren Schlauchwandung 101 bildet. Der Wandungsabschnitt 111 erstreckt sich hierbei entlang einer Längsrichtung 113 des Hüllschlauchs 100 Helix-förmig. Hierbei werden die Ränder des Wandungsabschnitts 111 durch den Schlitz 105 begrenzt.

Der Wandungsabschnitt 111 weist eine Wandungsbreite 115 auf, welche sich entlang der Längsrichtung 113 des Hüllschlauchs 100 erstreckt, wobei die Wandungsbreite 115 über die gesamte Länge der elastomeren Schlauchwandung 101 konstant ist. Hierbei weist jede Windung des Wandungsabschnitts 111 die gleiche Wandungsbreite 115 auf, wobei die Wandungsbreite 115 zwischen 5 mm und 100 mm, insbesondere 25 mm, betragen kann.

Der Hüllschlauch 100 ist als ein elastisch verformbarer und biegbarer Hüllschlauch 100 ausgebildet. Hierbei kann der Hüllschlauch 100 insbesondere entlang einer sich quer zur Längsrichtung 113 des Hüllschlauchs 100 erstreckenden ersten Querrichtung 117, bzw. einer sich quer zur Längsrichtung 113 des Hüllschlauchs 100 erstreckenden zweiten Querrichtung 119 gebogen werden. Wie in Fig. 1 nicht dargestellt ist, ist der Schlitz 105 zumindest abschnittsweise aufweitbar, um ein wirksames Biegen des Hüllschlauchs 100 zu ermöglichen.

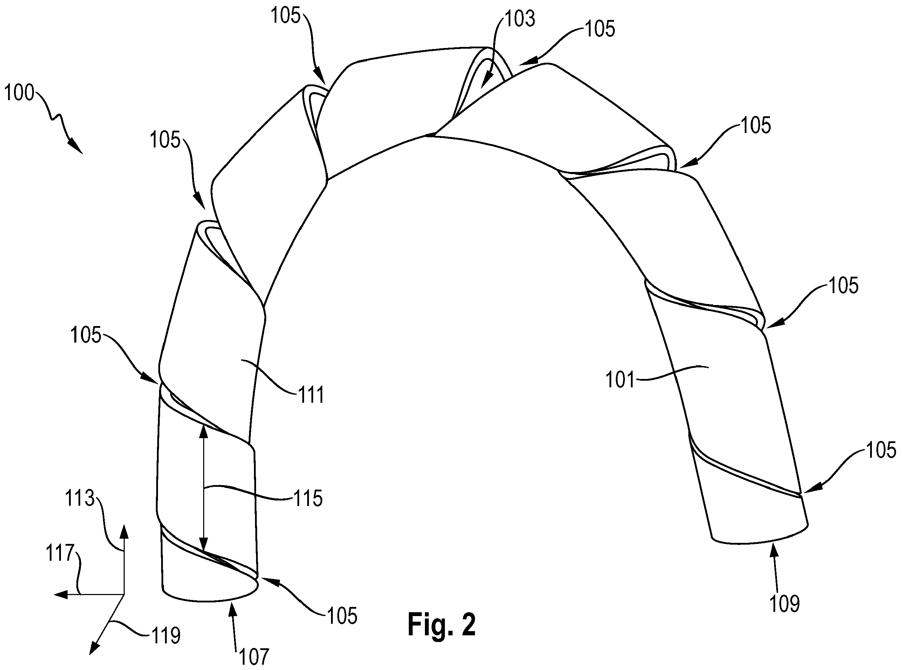

Fig. 2 zeigt eine perspektivische Ansicht eines gebogenen Hüllschlauchs gemäß der Fig. 1 zum Umhüllen einer Leitung. Eine elastomere Schlauchwandung 101 des Hüllschlauchs 100 begrenzt einen Schlauchhohlraum 103, welcher ausgebildet ist, eine in Fig. 2 nicht dargestellte Leitung aufzunehmen. Ein Schlitz 105 durchtrennt die elastomere Schlauchwandung 101 Helix-förmig. Der Schlitz 105 erstreckt sich hierbei von einem ersten Längsende 107 des Hüllschlauchs 100 zu einem gegenüberliegenden zweiten Längsende 109 des Hüllschlauchs 100 und der Schlitz 105 umläuft die elastomere Schlauchwandung 101 mehrmals, um die elastomere Schlauchwandung 101 Helix-förmig zu durchtrennen.

Der Schlitz 105 begrenzt einen Wandungsabschnitt 111 der elastomeren Schlauchwandung 101. Durch den Schlitz 105 wird die elastomere Schlauchwandung 101 in ein gewundenes Schlauchband aufgetrennt, welches den Wandungsabschnitt 111 der elastomeren Schlauchwandung 101 bildet, wobei der Wandungsabschnitt 111 eine Wandungsbreite 115 aufweist, welche sich entlang einer Längsrichtung 113 des Hüllschlauchs 100 erstreckt.

Der Hüllschlauch 100 ist als ein elastisch verformbarer und biegbarer Hüllschlauch 100 ausgebildet. In der in Fig. 2 gewählten Darstellung ist der Hüllschlauch 100 in einer gebogenen Ausführung dargestellt. Der Schlitz 105 stellt hierbei die besonders vorteilhafte Biegungseignung des Hüllschlauchs 100 sicher. Wird der Hüllschlauch 100 um einen Biegepunkt gebogen, weitet sich der die elastomere Schlauchwandung 101 durchtrennende Schlitz 105 auf einer dem Biegepunkt abgewandten Seite der elastomeren Schlauchwandung 101 auf. Dadurch wird der Bewegungsspielraum des Hüllschlauchs 100 bei geringen Biegeradien erhöht. Somit kann eine in Fig. 2 nicht dargestellte Leitung, welche von dem Hüllschlauch 100 umhüllt wird, zusammen mit dem Hüllschlauch 100 wirksam gebogen werden.

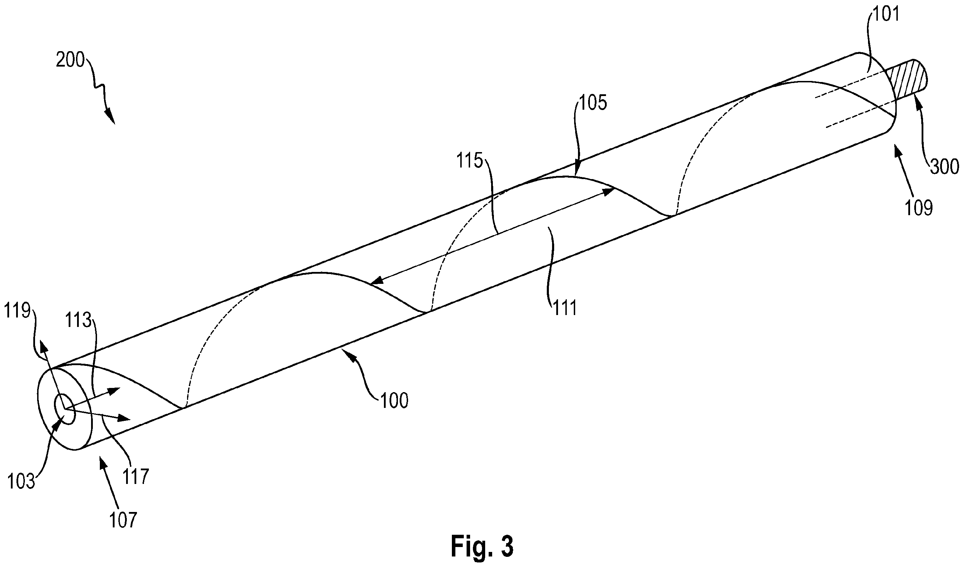

Fig. 3 zeigt eine perspektivische Ansicht einer Leitungsanordnung mit einer von einem Hüllschlauch umhüllten Leitung, insbesondere einer fluidführenden Leitung. Die Leitungsanordnung 200 umfasst einen Hüllschlauch 100, welcher eine Leitung 300 umhüllt. Hierbei begrenzt eine elastomere Schlauchwandung 101 einen Schlauchhohlraum 103, in welchen die Leitung 300 eingeführt ist.

Ein die elastomere Schlauchwandung 101 Helix-förmig durchtrennender Schlitz 105 erstreckt sich hierbei von einem ersten Längsende 107 des Hüllschlauchs 100 zu einem gegenüberliegenden zweiten Längsende 109 des Hüllschlauchs 100 entlang einer Längsrichtung 113 des Hüllschlauchs 100 und der Schlitz 105 umläuft die elastomere Schlauchwandung 101 mehrmals, um die elastomere Schlauchwandung 101 Helix-förmig zu durchtrennen.

Der Schlitz 105 begrenzt einen Wandungsabschnitt 111 der elastomeren Schlauchwandung 101. Durch den Schlitz 105 wird die elastomere Schlauchwandung 101 in ein gewundenes Schlauchband aufgetrennt, welches den Wandungsabschnitt 111 der elastomeren Schlauchwandung 101 bildet, wobei der Wandungsabschnitt 111 eine Wandungsbreite 115 aufweist, welche sich entlang einer Längsrichtung 113 des Hüllschlauchs 100 erstreckt.

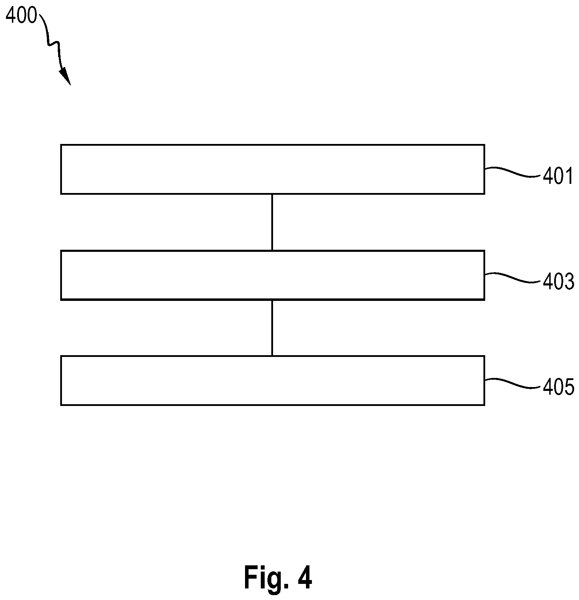

Fig. 4 zeigt ein Verfahren zum Herstellen eines Hüllschlauchs zum Umhüllen einer Leitung, insbesondere einer fluidführenden Leitung. Das Verfahren 400 umfasst als ersten Schritt das Extrudieren 401 eines Hüllschlauchs 100 mit einer elastomeren Schlauchwandung 101. Das Verfahren 200 umfasst als zweiten Schritt das Anlegen 403 einer Schneidevorrichtung an die elastomere Schlauchwandung 101. Das Verfahren umfasst als dritten Schritt das Bewegen 405 des Hüllschlauchs 100, wobei die Schneidevorrichtung während der Bewegung des Hüllschlauchs 100 die elastomere Schlauchwandung 101 schneidet, um einen Schlitz 105 in der elastomere Schlauchwandung 101 zu erzeugen, welcher die elastomere Schlauchwandung 101 Helix-förmig durchtrennt.

Alle in Verbindung mit einzelnen Ausführungsformen der Erfindung erläuterten und gezeigten Merkmale können in unterschiedlicher Kombination in dem erfindungsgemäßen Gegenstand vorgesehen sein, um gleichzeitig deren vorteilhafte Wirkungen zu realisieren.

Der Schutzbereich der vorliegenden Erfindung ist durch die Ansprüche gegeben und wird durch die in der Beschreibung erläuterten oder den Figuren gezeigten Merkmale nicht beschränkt.

### BEZUGSZEICHENLISTE

- 100: Hüllschlauch
- 101: Elastomere Schlauchwandung
- 103: Schlauchhohlraum
- 105: Schlitz
- 107: Erstes Längsende des Hüllschlauchs
- 109: Zweites Längsende des Hüllschlauchs
- 111: Wandungsabschnitt
- 113: Längsrichtung des Hüllschlauchs
- 115: Wandungsbreite
- 117: Erste Querrichtung des Hüllschlauchs
- 119: Zweite Querrichtung des Hüllschlauchs
- 200: Leitungsanordnung
- 300: Leitung
- 400: Verfahren zum Herstellen eines Hüllschlauchs
- 401: Erster Verfahrensschritt: Extrudieren eines Hüllschlauchs
- 403: Zweiter Verfahrensschritt: Anlegen einer Schneidevorrichtung an die elastomere Schlauchwandung
- 405: Dritter Verfahrensschritt: Bewegen des Hüllschlauchs entlang einer Längsrichtung

## Patentansprüche

1. Hüllschlauch (100) zum Umhüllen einer Leitung (300), insbesondere einer fluidführenden Leitung (300), wobei der Hüllschlauch (100) eine elastomere Schlauchwandung (101) aufweist, in welcher ein Schlitz (105) gebildet ist, und wobei der Schlitz (105) die elastomere Schlauchwandung (101) Helix-förmig durchtrennt.

2. Hüllschlauch (100) nach Anspruch 1, wobei sich der Schlitz (105) von einem ersten Längsende (107) des Hüllschlauchs (100) zu einem gegenüberliegenden zweiten Längsende (109) des Hüllschlauchs (100) erstreckt und wobei der Schlitz (105) die elastomere Schlauchwandung (101) mehrmals umläuft, um die elastomere Schlauchwandung (101) Helix-förmig zu durchtrennen.

3. Hüllschlauch (100) nach Anspruch 1 oder 2, wobei der Hüllschlauch (100) als ein elastisch verformbarer und biegbarer Hüllschlauch (100) ausgebildet ist, und wobei insbesondere der Schlitz (105) zumindest abschnittsweise aufweitbar ist, um ein Biegen des Hüllschlauchs (100) zu ermöglichen.

4. Hüllschlauch (100) nach einem der vorangehenden Ansprüchen, wobei der die elastomere Schlauchwandung (101) Helix-förmig durchtrennende Schlitz (105) eine konstante Ganghöhe aufweist.

5. Hüllschlauch (100) nach einem Ansprüche 1 bis 3, wobei die elastomere Schlauchwandung (101) einen ersten Wandungsbereich aufweist, wobei der Helix-förmige Schlitz (105) in dem ersten Wandungsbereich eine erste Ganghöhe aufweist, wobei die elastomere Schlauchwandung (101) einen zweiten Wandungsbereich aufweist, welcher sich an den ersten Wandungsbereich anschließt, wobei der Helix-förmige Schlitz (105) in dem zweiten Wandungsbereich eine zweite Ganghöhe aufweist, und wobei die erste und zweite Ganghöhe unterschiedlich sind.

6. Hüllschlauch (100) nach einem der vorangehenden Ansprüche, wobei der die elastomere Schlauchwandung (101) Helix-förmig durchtrennende Schlitz (105) einen Wandungsabschnitt (111) der elastomeren Schlauchwandung (101) begrenzt, und wobei sich der Wandungsabschnitt (111) entlang einer Längsrichtung (113) des Hüllschlauchs (100) Helix-förmig erstreckt.

7. Hüllschlauch (100) nach Anspruch 6, wobei der Wandungsabschnitt (111) eine Wandungsbreite (115) aufweist, welche sich entlang der Längsrichtung (113) des Hüllschlauchs (100) erstreckt, und wobei die Wandungsbreite (115) insbesondere über die gesamte Länge der elastomeren Schlauchwandung (101) konstant ist.

8. Hüllschlauch (100) nach einem der vorangehenden Ansprüche, wobei die elastomere Schlauchwandung (101) zumindest ein Elastomer umfasst, welches ausgewählt ist aus der Gruppe umfassend Ethylen-Propylen-Dien-Kautschuk (EPDM), Ethylen-Acrylat-Kunststoff (AEM), Chloropren (CR), Acrylnitril-Butadien-Kautschuk (NBR), Silikon-Kautschuk, oder Mischungen davon.

9. Hüllschlauch (100) nach einem der vorangehenden Ansprüche, wobei die elastomere Schlauchwandung (101) zumindest ein Elastomer umfasst, welches ein thermoplastisches Elastomer (TPE), ein thermoplastisches Elastomer-Vulkanisat (TPE-V) oder Mischungen davon umfasst.

10. Hüllschlauch (100) nach einem der vorangehenden Ansprüche, wobei die elastomere Schlauchwandung (101) zumindest ein geschäumtes Elastomer mit Poren umfasst.

11. Hüllschlauch (100) nach einem der vorangehenden Ansprüche, wobei die elastomere Schlauchwandung (101) einen Schlauchhohlraum (103) begrenzt, welcher ausgebildet ist, eine Leitung (300), insbesondere eine fluidführende Leitung (300), aufzunehmen.

12. Hüllschlauch (100) nach einem der vorangehenden Ansprüche, wobei die elastomere Schlauchwandung (101) aus einer Vielzahl von aneinander anliegenden Elastomerschichten gebildet ist, wobei die Elastomerschichten insbesondere aus unterschiedlichen Elastomeren gebildet sind.

13. Leitungsanordnung (200) umfassend einen Hüllschlauch (100) nach einem der vorangehenden Ansprüche 1 bis 12, und eine Leitung (300), insbesondere eine fluidführende Leitung (300) zum Leiten eines Fluids, wobei der Hüllschlauch (100) die Leitung (300) zumindest abschnittsweise umhüllt.

14. Leitungsanordnung (200) nach Anspruch 13, wobei die Leitung (300) als eine biegbare Leitung (300) ausgebildet ist, wobei der Hüllschlauch (100) als ein elastisch verformbarer und biegbarer Hüllschlauch (100) ausgebildet ist, und wobei insbesondere der Schlitz (105) zumindest abschnittsweise aufweitbar ist, um ein Einführen der Leitung (300) in den Hüllschlauch (100) und eine Biegen des Hüllschlauchs (100) zusammen mit der Leitung (300) zu ermöglichen.

15. Verfahren (400) zum Herstellen eines Hüllschlauchs (100) zum Umhüllen einer Leitung (300), insbesondere einer fluidführenden Leitung (300), umfassend die folgenden Schritte:
Extrudieren (401) eines Hüllschlauchs (100) mit einer elastomeren Schlauchwandung (101);
Anlegen (403) einer Schneidevorrichtung an die elastomere Schlauchwandung (101);
Bewegen (405) des Hüllschlauchs (100), wobei die Schneidevorrichtung während der Bewegung des Hüllschlauchs (100) die elastomere Schlauchwandung (101) schneidet, um einen Schlitz (105) in der elastomere Schlauchwandung (101) zu erzeugen, welcher die elastomere Schlauchwandung (101) Helix-förmig durchtrennt.
